(19) Europäisches Patentamt

European Patent Office

Office européen des brevets

(11) Publication number: **0 513 851 A2**

## (12) EUROPEAN PATENT APPLICATION

(21) Application number: **92112252.9**

(22) Date of filing: **02.10.85**

(51) Int. Cl.5: **G06F 7/48**, G11C 7/00,
    G06F 15/66

This application was filed on 17 - 07 - 1992 as a divisional application to the application mentioned under INID code 60.

(30) Priority: **05.10.84 JP 208266/84**
       **20.05.85 JP 105850/85**

(43) Date of publication of application:
    **19.11.92 Bulletin 92/47**

(60) Publication number of the earlier application in accordance with Art.76 EPC: **0 189 524**

(84) Designated Contracting States:
    **DE FR GB**

(71) Applicant: **HITACHI, LTD.**
    **6, Kanda Surugadai 4-chome**
    **Chiyoda-ku, Tokyo 101(JP)**

(72) Inventor: **Kimura, Koichi**
    **643-1, Nakatacho, Totsuka-ku**
    **Yokohama(JP)**
    Inventor: **Ogura, Toshihiko**
    **2113, Kamiimaizumi**
    **Ebina-shi(JP)**
    Inventor: **Aotsu, Hiroaki**
    **1122, Shimokuratacho, Totsuka-ku**
    **Yokohama(JP)**
    Inventor: **Ikegami, Mitsuru**
    **2882-6, Mukohara, Yamakitamachi**
    **Ashigarakami-gun, Kanagawa-ken(JP)**
    Inventor: **Kuwabara, Tadashi**
    **Asahiryo 304, 1545, Yoshidacho**
    **Totsuka-ku, Yokohama(JP)**

(74) Representative: **Patentanwälte Beetz - Timpe -**
    **Siegfried - Schmitt-Fumian- Mayr**
    **Steinsdorfstrasse 10**
    **W-8000 München 22(DE)**

(54) **Memory device having arithmetic and logic functions, in particular for graphic processing.**

(57) A memory device comprising a random access memory with a controllable access mode, formed on a single chip as an integrated device. The memory device has address and data terminals and at least one control terminal.

Said RAM is a dynamic random access memory.

Means are provided for applying data from an external device via a data bus and said data terminals to said dynamic random access memory, including access control means responsive to control signals provided at least in part from lines other than said data bus for setting a data access mode indicated by said control signal prior to receipt of data from said external device.

A data access operation of said data applying means is preset in accordance with the mode set by said access control means prior to receipt of said data from said external device.

EP 0 513 851 A2

# F I G . 11

The present invention relates to a memory device of the kind referred to in the preamble-portion of patent claim 1 and to a method for storing data according to the preamble portion of patent claim 6. Such a memory device and such a method are known from US-A-3 984 670.

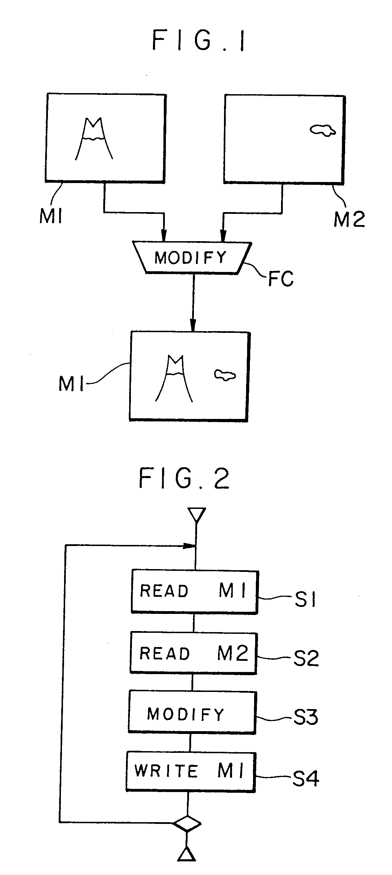

The prior art technique will be described by referring to graphic processing depicted as an example in Figs. 1-2. For example, the system of Fig. 1 comprises a graphic area M1 having a one-to-one correspondence with a cathode ray tube (CRT) screen, a store area M2 storing graphic data to be combined, and a modify section FC for combining the data in the graphic area M1 with the data in the store area M2. In Fig. 2, a processing flowchart includes a processing step S1 for reading data from the graphic area M1, a processing step S2 for reading data from the store area M2, a processing step S3 for combining the data read from the graphic area M1 and the data read from the store area M2, and a processing step for writing the composite data generated in the step S3 in the graphic area M1.

In the graphic processing example, the processing step S3 of Fig. 2 performs a logical OR operation only to combine the data of the graphic area M1 with that of the store are M2.

On the other hand, the graphic area M1 to be subjected to the graphic processing must have a large memory capacity ranging from 100 kilobytes to several megabytes in ordinary cases. Consequently, in a series of graphic processing shown in Fig. 2, the number of processing iterations to be executed is on the order of $10^6$ or greater even if the processing is conducted on each byte at a time.

Similarly referring to Figs. 2-3, a graphic processing will be described in which the areas M1 and M2 store multivalued data such as color data for which a pixel is represented by use of a plurality of bits.

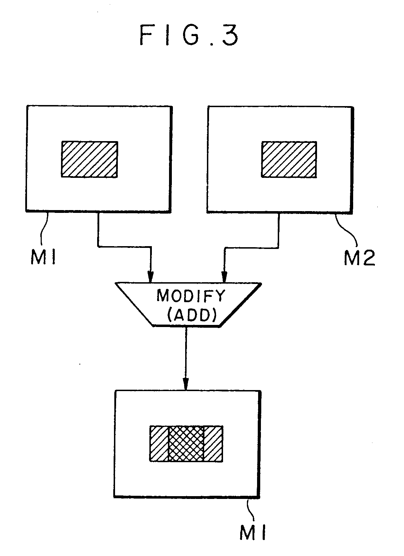

Referring now Fig. 3, a graphic processing arrangement comprises a memory area M1 storing the original multivalued graphic data and a memory area M2 containing multivalued graphic data to be combined.

For the processing of multivalued graphic data shown in Fig. 3, an addition is adopted as the operation to ordinarily generate a composit graphic data. As a result, the values of data in the overlapped portion become larger, and hence a thick picture is displayed as indicated by the crosshatch. In this case, the memory area must have a large memory capacity. The number of iterations of processing from the step S1 to the step S4 becomes on the order of $10^6$ or greater as depicted in Fig. 2. Due to the large iteration count, most portion of graphic data processing time is occupied by the processing time to be elapsed to process the loop of Fig. 2. In the graphic data processing, therefore, the period of time utilized for the memory access becomes greater than the time elapsed for the data processing. Among the steps S1-S4 of Fig. 2, three steps S1, S2, and S4 are associated with the memory access. As described above, in such a processing as an graphic data processing in which a memory having a large capacity is accessed, even if the operation speed is improved, the memory access time becomes a bottleneck of the processing, which restricts the processing speed and does not allow to improve the effective processing speed of the graphic data processing system.

In the prior art examples, the following disadvantages take place.

(1) In the graphic processing as shown by use of the flowchart of Fig. 2, most portion of processing is occupied by the steps S1, S2, and S4 which use the bus for memory read/write operations, consequently, the bus utilization ratio is increased and a higher load is imposed on the bus.

(2) The graphic processing time is further increased, for example, because the bus has a low transfer speed or the overhead becomes greater due to the operation such as the bus control to dedicatedly allocate the bus to the CRT display operation and to the memory access.

(3) Moreover, although the flowchart of Fig. 2 includes only four static processing steps, a quite large volume of data must be processed as described before. That is, the number of dynamic processing steps which may elapse the effective processing time becomes very large, and hence a considerably long processing time is necessary.

Consequently, it is desired to implement a graphic processing by use of a lower number of processing steps.

A memory device for executing the processing described above is found in the Japanese Patent Unexamined Publication No. 55-129387, for example.

US-A-39 84 670 discloses a memory device comprising a random access memory with a controllable access mode, formed on a single chip as an integrated device, having address and data terminals and at least one control terminal.

An interface bus is necessary between the memory chip and the CPU for setting an operation mode, which causes a complicated bus occupation control and considerable overheads.

It is therefore an object of the present invention to provide a method for storing graphic data and a device using the same which enables a higher-speed execution of dyadic and arithmetic operations on graphic data.

Another object of the present invention is to provide a memory device which performs read, modifiy, and write operations in a write cycle so that the number of dynamic steps is greatly reduced in the software section of the graphic processing.

Still another object of the present invention is to provide a memory device comprising a function to perform the dyadic and arithmetic operations so as to considerably lower the load imposed on the bus.

Further another object of the present invention is to provide a memory device which enables easily to implement a priority processing to be effected when graphic are overlapped.

According to the present invention, there is provided a memory circuit having the following three functions to effect a higher-speed execution of a processing to generate composite graphic data.

(1) A function to write external data in memory elements.

(2) A function to execute a logical operation between data beforehand stored in memory elements and the external data and to write the resultant data in the memory elements.

(3) A function to execute an arithmetic operation between data beforehand stored in memory elements and the external data and to write the resultant data in the memory elements.

A memory circuit which has these functions and which achieves a portion of the operation has been implemented with emphasis placed on the following points.

Also in the processing of many operations other than the processing to generate composite multivalued graphic data described above, the dyadic logic operation is required as an operation in which two operands are used. That is, the operation format is as follows in most cases.

$D \leftarrow D$ op $S$; where op stands for operator. On the other hand, the polynomial operation and multioperand operation as shown below are less frequently used.

$$D \leftarrow S_1 \text{ op } S_2 \text{ op } ..... \text{ op } S_n$$

When the dyadic and two-operand operation is conducted between data in a central processing unit (CPU) and data in the memory elements, the memory elements need be accessed only once if the operation result is to be stored in a register of the CPU (in a case where the D is a register and the S is the unit of memory elements). Contrarily, that is, if the D indicates the memory element unit and the S represents a register, the memory element unit must be accessed two times. In most cases of data processing including the multivalued graphic data processing, the number of data items is greater than the number of registers in the CPU; and hence the operation of the latter case where the D is the data element unit is frequently used; furthermore, each of two operands is stored in a memory element unit in many cases. Although the operation to access the S is indispensable to read the data, the D is accessed twice for read and write operations, that is, the same memory element unit is accessed two times for an operation.

To avoid this disadvantageous feature, the Read Modify Write adopted in the operation to access a dynamic random access memory (DRAM) is utilized so as to provide the memory circuit with an operation circuit so that the read and logic operations are carried out in the memory circuit, whereby the same memory element unit is accessed only once for an operation. The graphic data is modified in this fashion, which unnecessitates the operation to read the graphic data to be stored in the CPU and reduces the load imposed on the bus.

In accordance with the present invention there is provided a unit of memory elements which enables arbitrary operations to read, write, and store data characterized by including a control circuit which can operate in an ordinary write mode for storing in the memory element unit a first data supplied externally based on the first data and a second data in the memory element unit, a logic operation mode for storing an operation result obtained from a logic operation executed between the first and second data, and an arithmetic operation mode for storing in the memory element unit a result data obtained from an arithmetic operation executed between the first data and the second data.

BRIEF DESCRIPTION OF THE DRAWINGS

Fig. 1 is a schematic diagram for explaining an operation to generate a composite graphic image in a graphic data processing system.

Fig. 2 is a flowchart of processing applied to the prior art technique to generate a composite graphic data.

Fig. 3 is a schematic block diagram for explaining a multivalued graphic data processing.

Fig. 4 is a timing chart illustrating the ordinary operation of a memory.

Fig. 5 is an explanatory diagram of a memory having a logic function.

Fig. 6 is a table for explaining the operation modes of the memory of Fig. 5.

Fig. 7 is a schematic circuit diagram for implementing the logic function.

Figs. 8-9 are tables for explaining truth values in detail.

Fig. 10 is a block diagram depicting the configuration of a memory having a logic function.

Fig. 11 is a flowchart of processing to generate a composite graphic data by use of the memory of Fig. 10.

Fig. 12 is an explanatory diagram of processing to generate a composite graphic data by use of an EOR logic function.

Figs. 13-14 are schematic diagrams for explaining the processing to generate a composite graphic data according to the present invention.

Fig. 15 is an explanatory diagram of an embodiment of the present invention.

Fig. 16 is a table for explaining in detail the operation logic of the present invention.

Fig. 17 is a schematic circuit daigram of an embodiment of the present invention.

Fig. 18 is a circuit block diagram for explaining an embodiment applied to a color data processing.

Fig. 19 is a block diagram illustrating a memory circuit of an embodiment of the present invention.

Fig. 20 is a table for explaining the operation modes of a control circuit.

Fig. 21 is a schematic diagram illustrating an example of the control circuit configuration.

Fig. 22 is a circuit block diagram depicting an example of a 4-bit operational memory configuration.

Figs. 23a to 23c are diagrams for explaining an application example of an embodiment.

Fig. 24 is a schematic diagram for explaining a processing to delete multivalued graphic data.

## DESCRIPTION OF THE PREFERRED EMBODIMENTS

Referring the accompanying drawings, the following paragraphs describe embodiments of the present invention in detail.

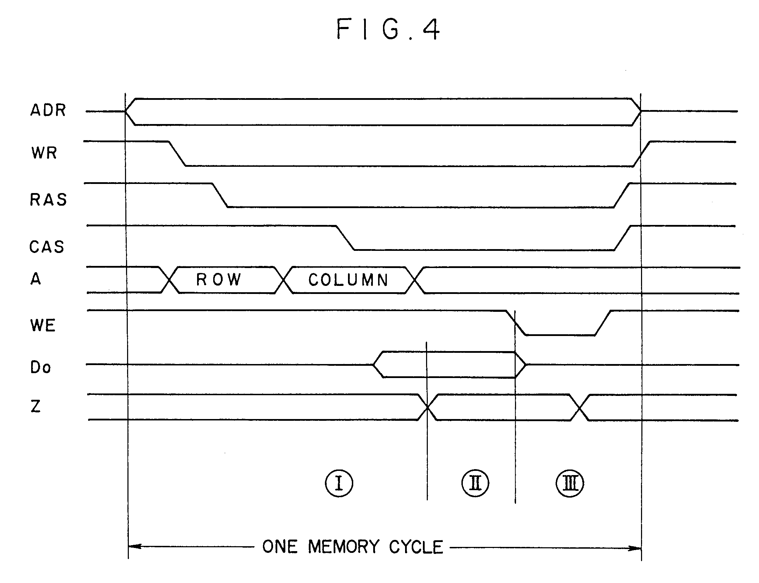

Fig. 4 is a timing chart of a DRAM. First, the operation to access the memory will be briefly described in conjunction with Fig. 4. In this timing chart, ADR is an address signal supplied from an external device and WR indicates a write request signal. These two signals (ADR and WR) are fed from a microprocessor, for example. In addition, RAS is a row address strobe signal, CAS is a column address strobe signal, A indicates an address signal representing a column or row address generated in the timesharing fashion, WE stands for a write enable signal, and Z is a data item supplied from an external device (microprocessor). Excepting the Z signal, they are control signals generated by a DRAM controller, for example. The memory access outlined in Fig. 4 can be sammarized as follows.

(i) As shown in Fig. 4, a memory access in a read/write cycle generally commences with a read cycle ( ① ) and ends with a write cycle

$$( \boxed{III} )$$

due to a write enable signal, WE.

(ii) Between the read cycle ( ① ) and the write cycle

$$( \boxed{III} ) ,$$

there appears an interval ( ② ) in which a read data $\overline{Do}$ and an external data Z (to be written) exist simultaneously.

(iii) This interval ( ② ) is referred to as the operation enabled interval.

As described above, the store data Do and the external write data Z exist simultaneously in the interval ② . As a consequence, the store data Do and the external Z can be subjected to an operation during a memory cycle in this interval by use of the memory circuit having an operation function, thereby enabling the operation result to be written in the memory circuit.

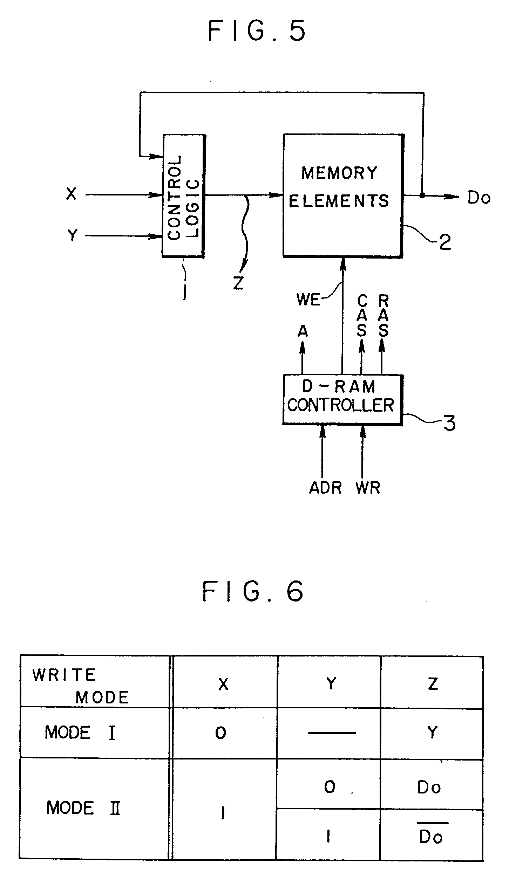

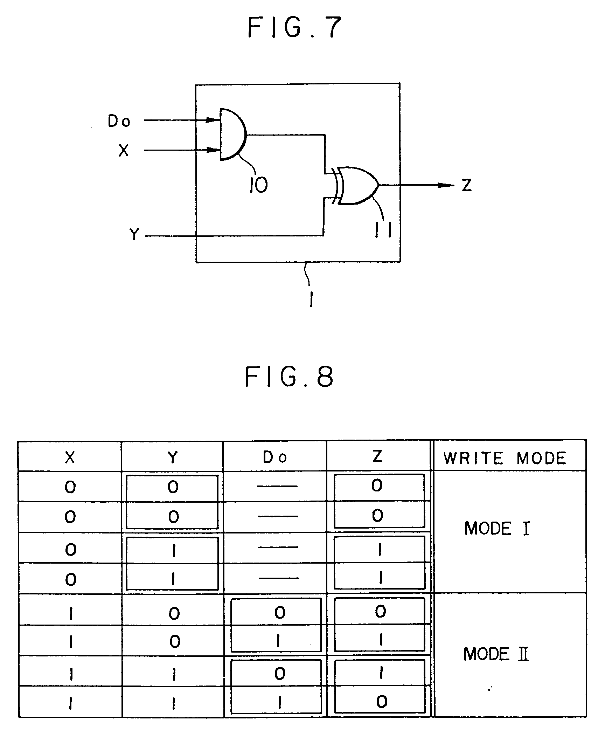

Fig. 5 is a block diagram illustrating an embodiment of the present invention, Fig. 6 is an explanatory diagram of the operation principle of the embodiment shown in Fig. 5, Fig. 7 is a circuit example implementing the operation principle of Fig. 6, and Fig. 8 is a table for explaining in detail the operation of the circuit shown in Fig. 7.

The circuit configuration of Fig. 5 comprises a control logic circuit 1, a unit of memory elements 2, a DRAM controller 3, external data X and Y, a write data Z to the memory element unit 2, a read data Do from the memory element unit 2, and signals A, CAS, RAS, ADR, and WR which are the same as those described in conjunction with Fig. 4. The external data Z of Fig. 4 is replaced with the write data Z delivered via the control circuit 1 to the memory element unit 2 in Fig. 5.

In accordance with an aspect of the present invention as shown in Fig. 5, the control circuit 1 controls the read data Do by use of the external data signals X and Y, and the modified read data is written in the memory element unit 2. Fig. 6 is a table for explaining the control operation. In this table, mode I is provided to set the external data Y as the write data Z, whereas mode II is provided to set the read data Do as the write data Z. As shown in Fig. 6, the external data signals X and Y, namely, the external control is used to control two modes, that is, the read data of the memory element unit 2 is altered and written (mode II), or the external data Y is written (mode I). For the control of two modes, (i) mode I or II is specified by the external data X and (ii) the modification specification to invert or not to invert the read data Do is made by use of an external data.

The control and modification are effected in the interval ⑪ described in conjunction with Fig. 4.

A concrete circuit example implementing the operation described above is shown in Fig. 7.

The control circuit comprises an AND gate 10 and an EOR gate 11 and operates according to the truth table of Fig. 8, which illustrates the relationships among two external data signals X and Y, store data Do, and output Z from the control circuit 1.

As can be seen from Fig. 8, the control circuit 1 operates primarily in the following two operation modes depending on the external data X.

(i) When the external data X is '0', it operates in the operation mode I in which the external data Y is processed as the write data Z.

(ii) When the external data X is '1', it operates in the operation mode II in which the data obtained by modifying the read data Do based on the external data Y is used as the write data Z.

As already shown in Fig. 4, the operation above is executed during a memory cycle.

Consequently, the principle of the present invention is described as follows.

(i) The output Do from the memory element unit is fed back as an input signal to the control circuit as described in conjunction with Fig. 4; and

(ii) The write data to the memory cell unit 2 is controlled by use of the input data signals X and Y (generated from the write data from the CPU) as shown in Fig. 5.

These operations (i) and (ii) are executed during a memory cycle. That is, a data item in memory elements is modified with an external input data (namely, an operation is conducted between these two data items) during a memory cycle by use of three data items including (i) feedback data from the memory cells, (ii) data inputted from an external device, and (iii) control data from an external device (a portion of external input data is also used as the control data). These operations imply that an external device (for example, a graphic processing system, a CPU available at present, or the like) can execute a logic operation only by use of a write operation.

The operation of the circuit shown in Fig. 7, on the other hand, is expressed as follows

$$Z = \overline{\overline{X \cdot Do} \; Y} + X \cdot Do \cdot \overline{Y} = \overline{Do} \cdot Y + \overline{X} \cdot Y + X \cdot Do \cdot \overline{Y}$$

$$= (\overline{X} + X) \cdot \overline{Do} \cdot Y + \overline{X} \cdot Y + X \cdot Do \cdot \overline{Y} = \overline{X} \cdot Y + X \cdot (Y \oplus Do)$$

$$\cdots \cdots \cdots \cdots (1)$$

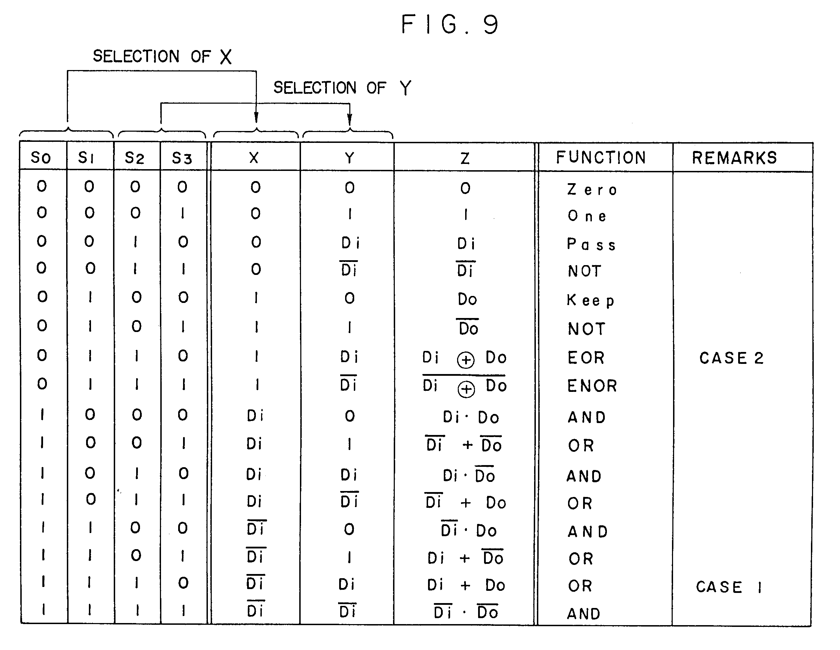

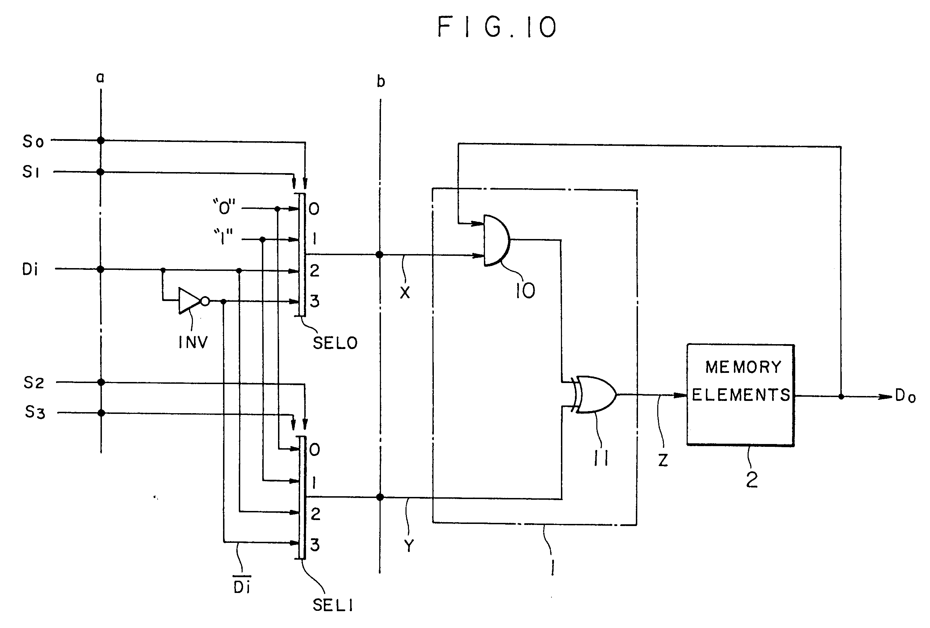

Substituting the externally controllable data items X and Y with the applicable values of a signal "0", a signal "1", the bus data Di fed from the microprocessor, and the reversed data thereof $\overline{Di}$ appropriately, the operation results of the dyadic logic operations as shown in Fig. 9 will be obtained. Fig. 10 is a circuit diagram implemented by combining the dyadic operations of Fig. 9 with the processing system of Fig. 5. The system of Fig. 10 comprises four-input selectors SEL∅ and SEL1, input select signals S0 and S1 to the selector SEL∅, input select signals S2 and S3 to the selector SEL1, and an inverter element INV.

Referring now to Fig. 1 and Figs. 9-11, an operation example of a logic operation will be concretely described.

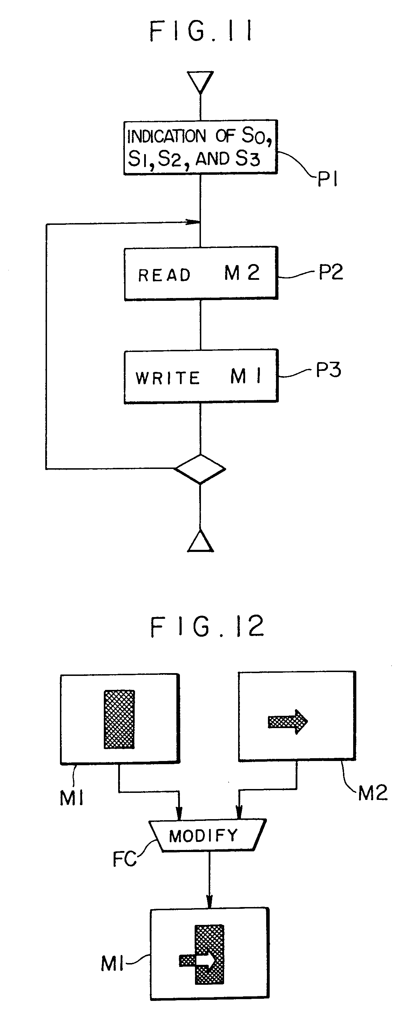

As shown in Fig. 9, the input select signals S0 and S1 are used as the select signals of the selector SEL∅ to determine the value of data X. Similarly, the input select signals S2 and S3 are used to determine the value of data Y. The values that can be set to these data items X and Y include a signal "0", a signal "1", the bus data Di, and the inverted data thereof $\overline{Di}$ as described before. The selectors SEL0 and SEL1 each select one of these four signal values depending on the input select signals $S_0$ to $S_3$ as shown in Fig. 10. Fig. 9 is a table illustrating the relationships between the input select signals S0 to S3 and the data items X and Y outputted from the selectors SEL0 and SEL1, respectively as well as the write data Z outputted from the control circuit 1. In a graphic processing as shown in Fig. 1 (OR operation: Case 1), for example, the data items X and Y are selected as $\overline{Di}$ and Di, respectively when the input select signals are set as follows: S0, S1 = (11) and $S_2$, $S_3$ = (10). Substituting these values of X and Y in the expression (1) representing the operation of the control circuit 1, the OR operation, namely, Z = Di + $\overline{Di}$ Do = Di$^{\bullet}$ - (1 + Do) + $\overline{Di}$ Do = Di + (Di + $\overline{Di}$) Do = Di + Do is executed. In accordance with an aspect of the present invention, therefore, the graphic processing of Fig. 1 can be performed as shown in Fig. 11 in which the input select signals S0 to S1 are specified in the first step (function specification), a graphic data item to be combined is thereafter read from the storage area M2, and the obtained data item is stored in the graphic area only by use of a write operation.

Various logic functions can be effected by changing the values of S0 to S3 as depicted in Fig. 9. Consequently, an operation to draw a picture, for example, by use of a mouse cursor which is arbitrarily moved can be readily executed as shown in Fig. 12. Even when the mouse cursor (M2) overlaps with a graphic image in the graphic area M1 as illustrated in Fig. 12, the cursor must be displayed, and hence a function of the EOR operation is necessary. In this cursor display, when the input select signals are set as S0, S1 = (10) and S2, S3 = (01), the processing can be achieved as depicted in Fig. 11 in the same manner as the case of the composite graphic data generation described before. The various logic functions as listed in the table of Fig. 9 can be therefore easily implemented; furthermore, the Read Modify Write operation on the memory element unit 2 can be accomplished only by a write operation.

By use of the circuit configuration of Fig. 10, the dyadic logic operations of Fig. 9 can be executed as a modify operation to be conducted between the data Di from the microprocessor and the read data Do from the memory element unit 2. Incidentally, the input select signals are used to specify a dyadic logic operation.

In accordance with the embodiment described above, the prior art processing to generate a composite graphic image can be simplified as depicted by the flowchart of Fig. 11.

The embodiment of the present invention described above comprises three functions as shown in Fig. 10, namely, a memory section including memory elements 2, a control section having the control circuit 1, and a selector section including the selectors SEL0 and SEL1. However, the function implemented by a combination of the control and selector sections is identical to the dyadic logic operation function described in conjunction with Fig. 9. Although this function can be easily achieved by use of other means, the embodiment above is preferable to simplify the circuit configuration.

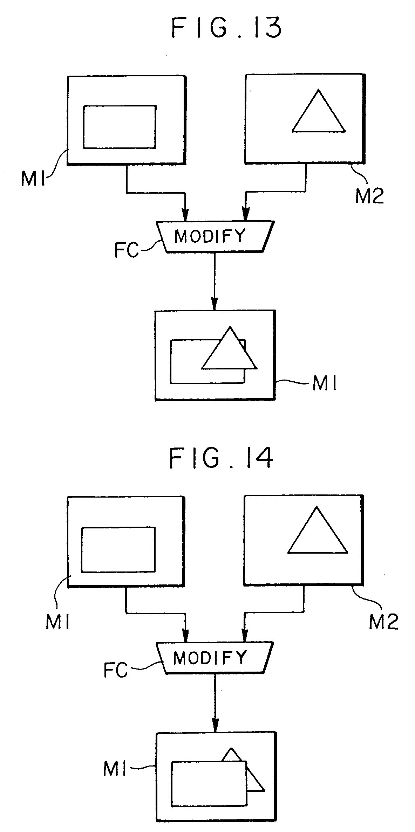

On the other hand, the graphic processing is required to include a processing in which graphic images and the like are overlapped as illustrated in Figs. 13-14. In the first case, the graphic image in the store area M2 takes precedence over the graphic image in the graphic image area M1 when they are displayed as depicted in Fig. 13. In the second case, the graphic image in the graphic image area M1 takes precedence over the graphic image in the store area M2 as shown in Fig. 14.

The priority processing to determine the priority of graphic data as illustrated in Fig. 13-14 cannot be achieved only by the logical function (implemented by the FC section of Fig. 10) described above.

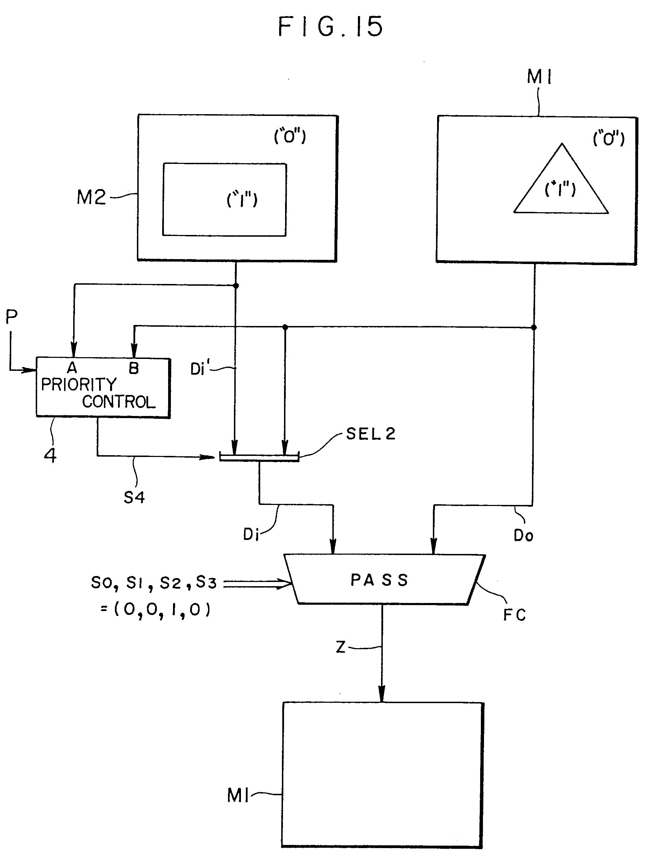

This function, however, can be easily implemented by use of the memory circuit in an embodiment of the present invention, namely, only simple logic and selector circuits need be added to the graphic processing system. An embodiment realizing such a function will be described by referring to Figs. 15-17. The FC section of Fig. 15 corresponds to a combination of the control circuit and the selectors SEL0 and SEL1. In the embodiment, the logic operation function (FC) section operates in the pass mode with the input select signals S0 to S3 of the selectors SEL0 and SEL1 set as (0, 0, 1, 0), for example.

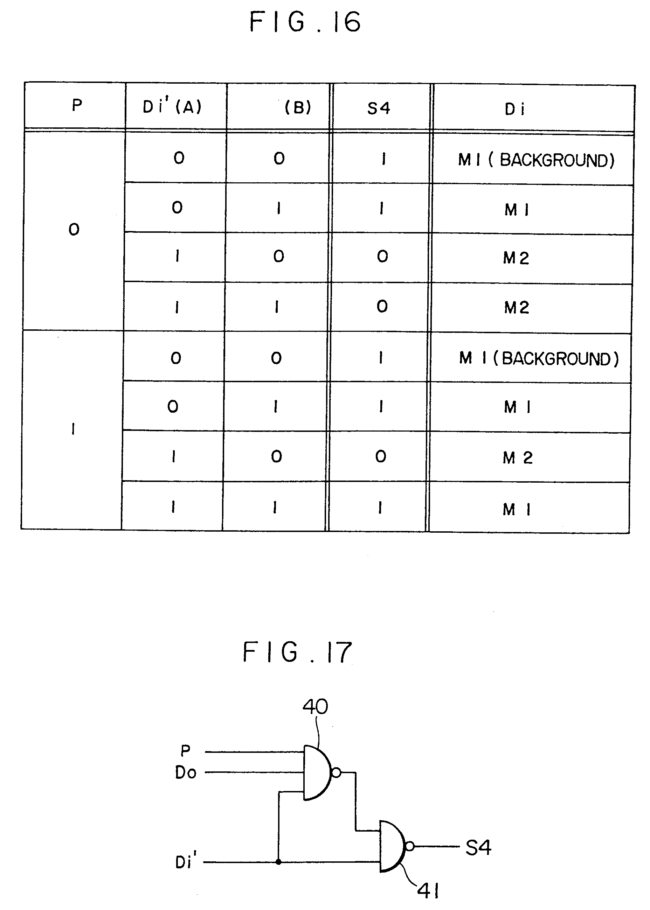

The circuit block diagram of Fig. 15 includes a priority control section 4, a two-input selector SEL2, a priority specification signal P, an input select signal S4 to the selector SEL2, a graphic data signal Di' from the store area M2, a graphic image area M1, a selected signal Di from selector SEL2, a graphic data signal $\overline{Do}$ from the graphic image area M1 (identical to the read data signal from the memory elements 2 shown in Fig. 10), and an output signal Z from the FC section (identical to the output signal from the control circuit 1 of Fig. 4). For the convenience of explanation, the graphic area is set to a logic value "1" and the background are is set to a logic value "0" as shown in Fig. 15. In this processing, the priority control section 4 and the selector SEL2 operate according to the contents of the truth table of Fig. 16. The relationships between the input select signal S4 and the input data Di to the logic operation function (FC) section are outlined in Fig. 16, where the signal S4 is determined by a combination of the priority specification signal P, the data Di' in the area M2, and the data Do from the area M1, and the input data Di is set by the signal S4.

In other words, the truth table of Fig. 16 indicates to determine an operation as follows. Assume that the graphic area to be used as the background is M1, for example. If the data items Do and Di' in the areas M1 and M2, respectively are set to the effective data ("1"), the priority specification signal P is used to determine whether the data Do of the background area M1 takes precedence (P = 1) or the data Di' of the area M2 takes precedence (P = 0).

That is, if a graphic image in the store area M2 is desired to be displayed over a graphic image of the graphic area M1 as illustrated in Fig. 13, the priority specification signal P is set to "0". Then, if the graphic data items Di' and Do are in the graphic areas ("1") as depicted in Fig. 17, the data Di' of the store area M2 is preferentially selected by the selector SEL2. If the priority specification signal P is set to "1", the graphic processing is similarly executed according to the truth table of Fig. 16 as shown in Fig. 14.

In Fig. 16, if the graphic areas ("1") are overlapped, the graphic area of the graphic area M1 or the store area M2 is selected depending on the priority specification signal P, and the data of the graphic area M1 is selected as the background for the area in which the graphic area does not exist.

Fig. 17 is a concrete circuit diagram of the priority control section 4 depicted in Fig. 15. In this circuit diagram, reference numerals 40 and 41 indicate a three-input NAND circuit and a two-input NAND circuit, respectively.

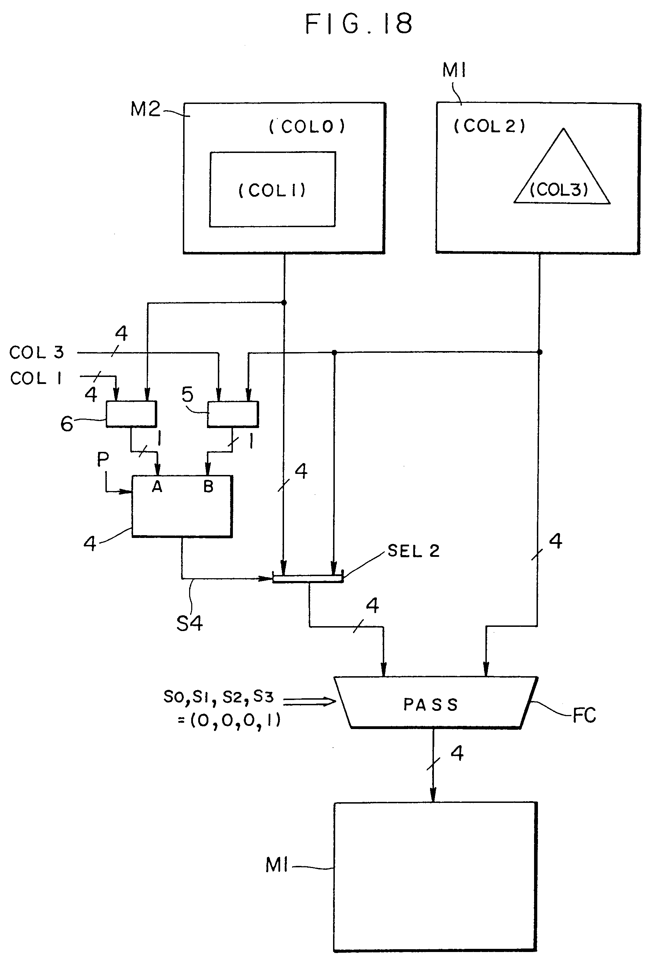

In order to apply the principle of the priority decision to color data in which each pixel comprises a plurality of bits, the circuit must be modified as illustrated in Fig. 18.

The circuit of Fig. 18 includes a compare and determine section 5 for determining the graphic area (COL3) of the graphic area M1 and a compare and determine section 6 for determining the graphic area (COL1) of the store area M1. As described above, the priority determine circuit of Fig. 18 is configured to process code information for which a pixel comprises a plurality of bits. It is different from the circuit for processing information for which a pixel comprises a bit as shown in Fig. 15 in that the priority determination between significant data items is achieved by use of the code information (COLØ to COL3) because the graphic data is expressed by the code information.

Consequently, in a case of color data, the overlapped graphic images can be easily processed by adding the compare and determine sections which determine the priority by comparing the code information.

The preceding paragraphs have described the priority determine circuit applied to an embodiment of the memory circuit having an operation function, it is clear that the embodiment can be applied to a simple memory circuit or a memory circuit which has integrated shift register and serial outputs.

In accordance with the embodiment, the following effect is developed.

(1) When executing the processing as shown in Fig. 1, the processing flowchart of Fig. 11 can be utilized, and hence the memory cycle can be minimized.

(2) Three kinds of processing including the read, modify, and write operations can be executed only during a write cycle, which enables to increase the processing speed.

(3) As depicted in Figs. 16-18, the priority processing to be conducted when the graphic images are overlapped can be effected by use of a plurality of simple logic gates.

(4) The graphic processing of color data can be also easily implemented by externally adding the compare and determine circuits for determining the graphic areas (code data comprising at least two bits).

(5) The size of the circuit configuration necessary for implementing the memory circuit according to the invention is quite small as compared with that of a group of memory elements, which is considerably advantageous to manufacture a large scall integration circuit in the same memory chip.

Next, another embodiment will be described in which processing to generate a composite graphic data represented as the multivalued data of Fig. 3 is executed.

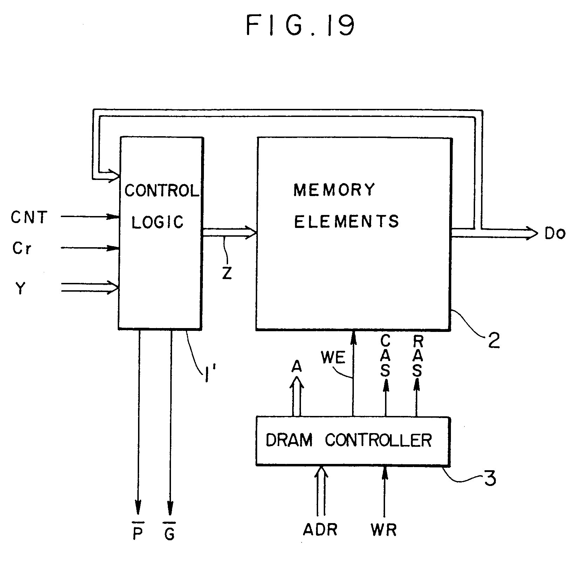

Fig. 19 is a circuit block diagram of a memory circuit applied to a case in which the multivalued data is processed. This circuit is different from the memory circuit of Fig. 5 in the configuration of a control circuit 1'.

The configuration of Fig. 19 is adopted because the processing to generate a composite graphic data from the multivalued data indispensably necessitates the arithmetic operation, not the simple logic operation. As shown in Fig. 19, however, the basic operation is the same as depicted in Fig. 5.

In the following paragraphs, although the arithmetic operation is described, the circuit configuration includes the sections associated with the logic operation because the logic operation is also used for the multivalued graphic data processing. The circuit arrangement of Fig. 19 includes a control circuit 1', memory elements 2, a DRAM controller 3, external control signals CNT and Cr, a data Y supplied from an external device, a write data Z to the memory elements 2, a read data Do from the memory elements 2, and signals A, WE, CAS, RAS, ADR, and WR which are the same as those shown in Fig. 5.

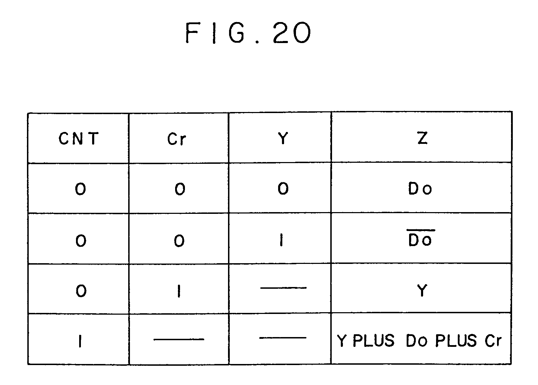

In the embodiment as shown in Fig. 19, the control circuit 1' performs an operation on the read data Do and the external data Y according to the external control signals CNT and Cr; and the operation result, write data Z is written in the memory elements 2. Fig. 20 is a table illustrating the control operation modes of the control circuit 1'. When the external control signals CNT and Cr are set to ∅, the control circuit 1' operates in a mode where the external data Y is used as a control signal to determine whether or not the read data Do is subjected to an inversion before it is outputted; when the signals CNT and Cr are set to 0 and 1, respectively, the control circuit 1' operates in a mode where the external data Y is outputted without change; and when the signals are set to 1, the control circuit 1' operates in a mode where the read data Do, the external data Y, and the external control signal Cr are arithmetically added.

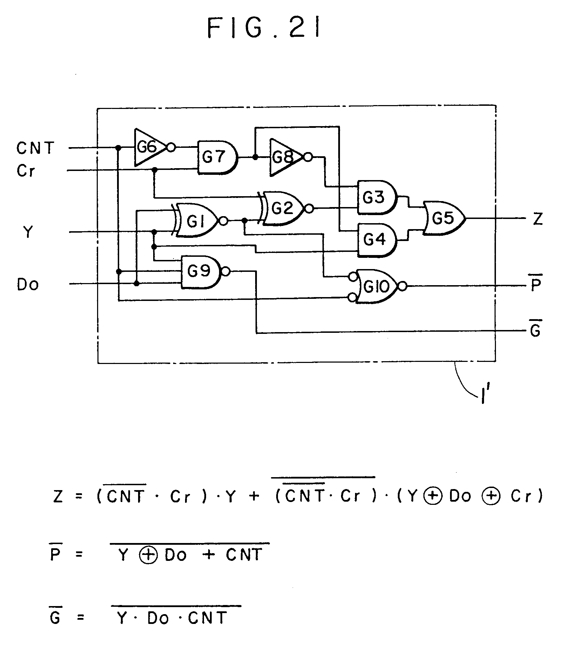

Fig. 21 is a concrete circuit diagram of a circuit implementing the control operation modes. In this circuit arrangement, the arithmetic operation is achieved by use of the ENOR gates G1 and G2, and the condition that the external control signals CNT and Cr are ∅ and 1, respectively is detected by the gates G6 to G8, and the output from the ENOR gate or the external data Y is selected by use of a selector constituted from the gates G3 to G5. This circuit configuration further includes a NAND gate G9 for outputting a generate signal associated with the carry lookahead function provided to minimize the propagation delay of the carry and an AND gate G10 for generating a propagate signal similarly associated with the carry lookahead function. The logical expressions of the output signals Z, P, and G from the control circuit 1' are as listed in Fig. 21, where the carry lookahead signals P and G each are set to fixed values ($\overline{P}$ = 0, $\overline{G}$ = 1) if the external control signal CNT is ∅.

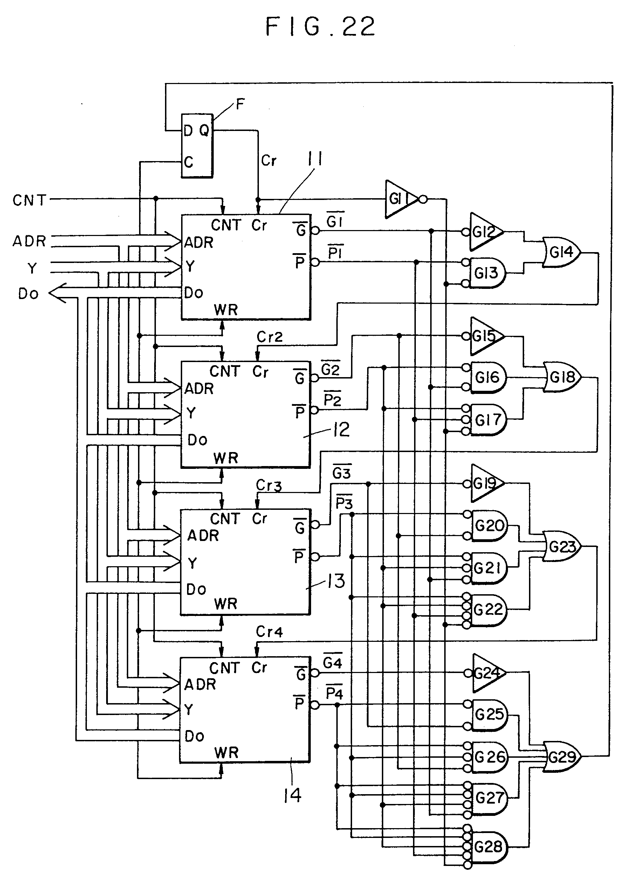

Fig. 22 is the configuration of a four-bit operation memory utilizing four memory circuits of the embodiment. For the simplification of explanation, only the sections primarily associated with the arithmetic operation mode are depicted in Fig. 22. The circuit diagram includes the memory circuits 11-14 shown in Fig. 19, gates G11 to G28 constituting a carry lookahead circuit for achieving a carry operation, and a register F for storing the result of a carry caused by an arithmetic operation. The memory circuits 11 and 14 are associated with the least- and most-significant bits, respectively.

Although not shown in this circuit configuration to simplify the circuit arrangement, the register F is connected to an external circuit which sets the content to ∅ or 1. The logical expression of the carry result, namely, the output from the gate G29 is as follows.

$$G4 + G3 \cdot P4 + G2 \cdot P3 \cdot P4 + G1 \cdot P2 \cdot P3 \cdot P4 + Cr \cdot P1 \cdot P2 \cdot P3 \cdot P4$$

When the external control signal CNT is ∅, $P_i$ and $G_i$ are set to 1 and ∅, respectively (where, i indicates an integer ranging from one to four), and hence the logical expression includes only the signal $\overline{Cr}$, which means that the value of the register F is not changed by a write operation. Since the intermediate carry signals Gr2 to Gr4 are also set to the value of the signal Cr, three operation states are not changed by a write operation when the external control signal CNT is ∅. If the external control signal CNT is 1, the carry control signals $\overline{P1}$ to $\overline{P4}$ and $\overline{G1}$ to $\overline{G4}$ of the memory circuits 11 - 14, respectively function as the carry lookahead signals, so an ordinary addition can be conducted.

As shown in Fig. 20, although the control circuit has a small number of operation modes, the operation functions can be increased by selecting the logic value ∅, the logic value 1, the write data D to a microprocessor or the like, and the inverted data $\overline{D}$ of the write data D as the inputs of the external control signal Cr and the external data Y.

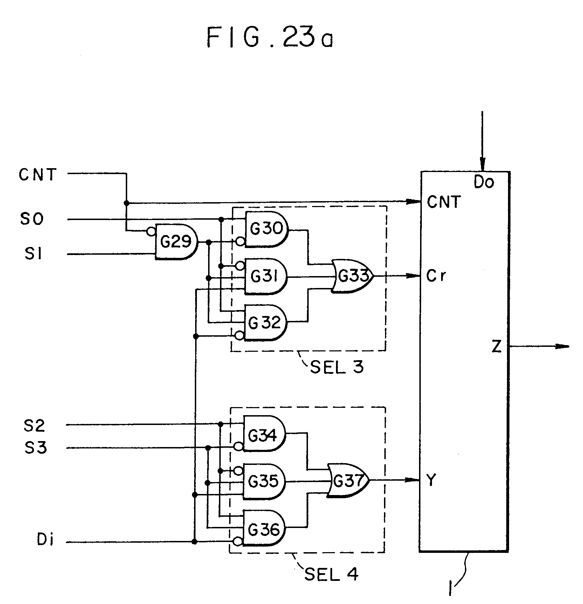

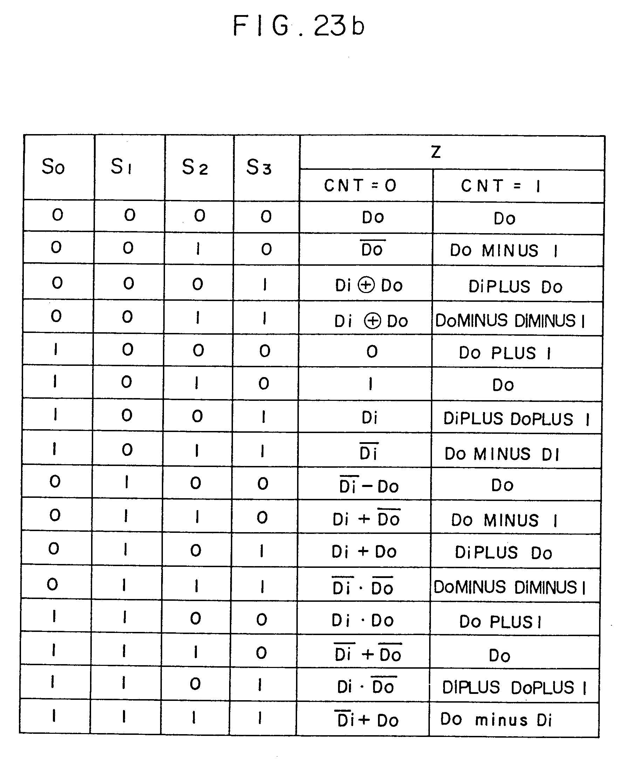

Figs. 23a to 23c illustrate an example in which above-mentioned circuits are combined. Fig. 23a is a concrete representation of a circuit for the least-significant bit, whereas Fig. 23b is a table outlining the operation functions of the circuit of Fig. 23a.

In the following paragraphs, the circuit operation will be described only in the arithmetic operation mode with the external control signal CNT set to 1.

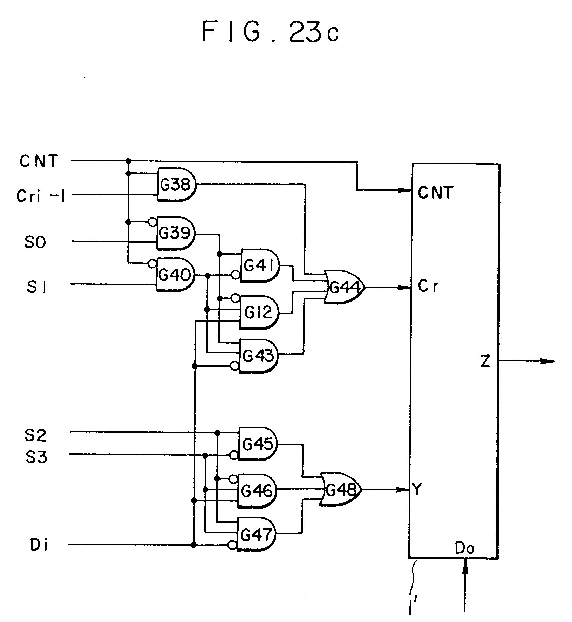

Gates G29 - G33 constitute a selector (SEL3) for the external control signal Cr, while gates G34 - G37 configure a selector (SEL4) for the external data Y. The circuit arrangement of Fig. 23a comprises select control signals S∅ and S1 for selecting the external control signal Cr and select control signals S2 and S3 for selecting the external data Y. Fig. 23c depicts a circuit for the most-significant bit. This circuit is different from that of Fig. 23a in that the selector for the signal Cr is constituted from the gates G38 - G44 so that a carry signal Cri-1 from the lower-order bit is inputted to the external control signal Cr when the external control signal CNT is 1. The selector for the external data Y is of the same configuration of that of Fig. 23a.

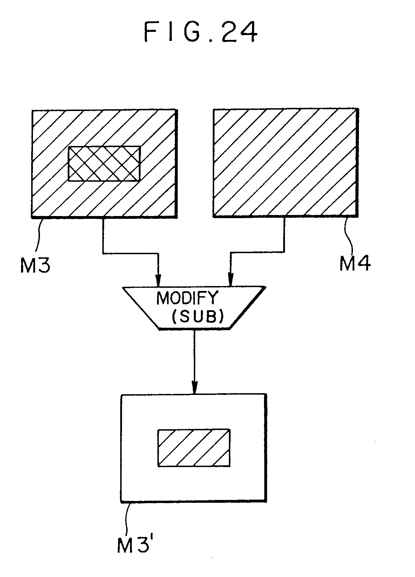

In the circuit configuration of Fig. 23c, the memory circuit arrangement enables to achieve 16 kinds of logical operations and six kinds of arithmetic operations by executing a memory write access. For example, the processing to overlap multivalued graphic data as shown in Fig. 3 is carried out as follows. First, the select signals S0 to S3 are set to 0, 0, 0, and 1, respectively and the write data Z is specified for an arithmetic operation of Do Plus 1. A data item is read from the multivalued graphic data memory M2 and the obtained data item is written in the destination multivalued graphic data area M1, which causes each data to be added and the multivalued graphic data items are overlapped at a higher speed. Similarly, if the select signals S0 to S3 are set to 1 and the write data Z is specified for a subtraction of Do Minus Di, the unnecessary portion (such as the noise) of the multivalued graphic data can be deleted as depicted in Fig. 24. Like the case of the overlap processing, this processing can be implemented only by executing a read operation on the data memory M3 containing the data from which the unnecessary portion is subtracted and by repeating a write operation thereafter on the destination data memory M3', which enables a higher-speed graphic processing.

According to the present invention,

(1) The multivalued graphic data processing is effected by repeating a memory access two times, and hence the processing such as the graphic data overlap processing and subtraction can be achieved at a higher speed;

(2) Since the data operation conducted between memory units is implemented on the memory side, the multivalued graphic processing can be implemented not only in a device such as a microprocessor which has an operation function but also in a device such as a direct memory access (DMA) controller which has not an operation function; and

(3) The carry processing is conducted when a memory write access is executed by use of the circuit configuration as shown in Fig. 22, so the multiple-precision arithmetic operation can be implemented only by using a memory write operation, thereby enabling a multiple-precision arithmetic operation to be achieved at a higher speed.

As can be understood from the foregoing description, the present invention leads to an advantage that the dyadic operation and the arithmetic operation can be performed on the graphic data at a higher speed.

In accordance with the present invention, moreover, the priority processing to be utilized when graphic images overlap and the processing for the color data can be readily implemented.

**Claims**

**1.** A memory device comprising a random access memory with a controllable access mode, formed on a single chip as an integrated device, having address and data terminals and at least one control terminal, **characterized in that**

(a) said RAM is a dynamic random access memory and

(b) means are provided for applying data from an external device via a data bus and said data terminals to said dynamic random access memory, including access control means responsive to control signals provided at least in part from lines other than said data bus for setting a data access mode indicated by said control signal prior to receipt of data from said external device, whereby a data access operation of said data applying means is preset in accordance with the mode set by said access control means prior to receipt of said data from said external device.

**2.** A memory device according to claim 1, **characterized in that** said memory device has a controllable access mode, and

means for selectively executing one of a first data access mode and a second data access mode on data supplied from an external device via a data bus and said data terminals to said random access memory device, including access control means for storing first access control data and second access control data received at least in part through lines other than said data bus prior to receipt of said data from said external device for controlling the operation of said executing means in executing said first data access mode or said second data access mode.

**3.** A memory device according to claim 2, wherein one of said first data access mode and said second data access mode is selected in response to a control signal supplied to said access control means from said external device.

**4.** A memory device according to claim 2, wherein said first access control data and said second access control data is supplied to said access control means via said address terminals from an address bus connected to said external device.

**5.** A memory device according to claim 1 or 2, **characterized in that** said control means have an output connected to said input means of said dynamic random access memory means, a first data input connected to receive first data provided via a data bus from said external device which accesses said dynamic random access memory means, a second data input connected to receive a control signal supplied from said external device via lines other than said data bus, and operation means for controlling the supply of said first data provided from said first data input to said dynamic random access memory means including access control means responsive to said control signal for setting a data access mode indicated by said control signal prior to receipt of said first data from said external device.

6. A method of storing data in a memory device comprising a random access memory with a controllable access mode, formed on a single chip as an integrated device having address and data terminals and at least one control terminal
**characterized by**
- applying data from an external device with a data bus and said data terminals to said dynamic random access memory,
- providing control signals at least in part from lines other than said data bus for setting a data access mode indicated by said control signal prior to receipt of data from said external device, whereby a data access operation of said data applying means is preset in accordance with the mode set by said access control means prior to receipt of said data from said external device.

# F I G . 1

# F I G . 2

# F I G . 3

MODIFY
(ADD)

MI

M2

MI

# FIG.4

ADR

WR

RAS

CAS

A    ROW    COLUMN

WE

Do

Z

Ⅰ    Ⅱ    Ⅲ

|←————— ONE MEMORY CYCLE ——————→|

EP 0 513 851 A2

# FIG. 5

# FIG. 6

| WRITE MODE | X | Y | Z |
|---|---|---|---|
| MODE I | 0 | —— | Y |
| MODE II | 1 | 0 | Do |
|  |  | 1 | $\overline{Do}$ |

15

# FIG. 7

# FIG. 8

| X | Y | Do | Z | WRITE MODE |
|---|---|---|---|---|
| O | O | —— | O | MODE I |
| O | O | —— | O | |
| O | I | —— | I | |
| O | I | —— | I | |
| I | O | O | O | MODE II |
| I | O | I | I | |
| I | I | O | I | |
| I | I | I | O | |

16

# FIG. 9

SELECTION OF X

SELECTION OF Y

| $S_0$ | $S_1$ | $S_2$ | $S_3$ | X | Y | Z | FUNCTION | REMARKS |
|---|---|---|---|---|---|---|---|---|
| 0 | 0 | 0 | 0 | 0 | 0 | 0 | Zero | |
| 0 | 0 | 0 | 1 | 0 | 1 | 1 | One | |
| 0 | 0 | 1 | 0 | 0 | $D_i$ | $D_i$ | Pass | |
| 0 | 0 | 1 | 1 | 0 | $\overline{D_i}$ | $\overline{D_i}$ | NOT | |
| 0 | 1 | 0 | 0 | 1 | 0 | $D_o$ | Keep | |
| 0 | 1 | 0 | 1 | 1 | 1 | $\overline{D_o}$ | NOT | |
| 0 | 1 | 1 | 0 | 1 | $D_i$ | $D_i \oplus D_o$ | EOR | CASE 2 |
| 0 | 1 | 1 | 1 | 1 | $\overline{D_i}$ | $\overline{D_i \oplus D_o}$ | ENOR | |
| 1 | 0 | 0 | 0 | $D_i$ | 0 | $D_i \cdot D_o$ | AND | |
| 1 | 0 | 0 | 1 | $D_i$ | 1 | $\overline{D_i} + \overline{D_o}$ | OR | |
| 1 | 0 | 1 | 0 | $D_i$ | $D_i$ | $D_i \cdot \overline{D_o}$ | AND | |
| 1 | 0 | 1 | 1 | $D_i$ | $\overline{D_i}$ | $\overline{D_i} + D_o$ | OR | |
| 1 | 1 | 0 | 0 | $\overline{D_i}$ | 0 | $\overline{D_i} \cdot D_o$ | AND | |
| 1 | 1 | 0 | 1 | $\overline{D_i}$ | 1 | $D_i + \overline{D_o}$ | OR | |
| 1 | 1 | 1 | 0 | $\overline{D_i}$ | $D_i$ | $D_i + D_o$ | OR | CASE 1 |
| 1 | 1 | 1 | 1 | $\overline{D_i}$ | $\overline{D_i}$ | $\overline{D_i} \cdot \overline{D_o}$ | AND | |

EP 0 513 851 A2

F I G. 10

EP 0 513 851 A2

# FIG. 11

```
        ▽
        │
┌───────────────────┐
│ INDICATION OF S0, │
│ S1, S2, AND S3    │──── P1
└───────────────────┘
        │
   ┌───→│
   │    │
   │ ┌───────────────┐
   │ │ READ    M2    │──── P2
   │ └───────────────┘
   │    │
   │ ┌───────────────┐
   │ │ WRITE   M1    │──── P3
   │ └───────────────┘
   │    │
   │    ◇
   └────┘
        │
        △
```

# FIG. 12

## FIG.13

## FIG.14

# F I G . 15

# FIG.16

| P | Di'(A) | (B) | S4 | Di |
|---|---|---|---|---|
| 0 | O | O | I | M I ( BACKGROUND) |
| | O | I | I | M I |
| | I | O | O | M 2 |
| | I | I | O | M 2 |
| I | O | O | I | M I (BACKGROUND) |
| | O | I | I | M I |
| | I | O | O | M 2 |
| | I | I | I | M I |

# FIG.17

FIG. 18

# F I G . 19

# FIG.20

| CNT | Cr | Y | Z |
|:---:|:---:|:---:|:---:|
| O | O | O | Do |
| O | O | I | $\overline{Do}$ |
| O | I | —— | Y |
| I | —— | —— | Y PLUS Do PLUS Cr |

# FIG. 21

$$Z = \overline{(\overline{CNT} \cdot Cr)} \cdot Y + \overline{\overline{(\overline{CNT} \cdot Cr)}} \cdot (Y \oplus Do \oplus Cr)$$

$$\overline{P} = \overline{Y \oplus Do + CNT}$$

$$\overline{G} = \overline{Y \cdot Do \cdot CNT}$$

26

# FIG.22

# FIG.23a

# F I G . 23 b

| So | S₁ | S₂ | S₃ | Z | |
|---|---|---|---|---|---|
| | | | | CNT = O | CNT = I |
| O | O | O | O | Do | Do |
| O | O | I | O | $\overline{Do}$ | Do MINUS I |
| O | O | O | I | Di ⊕ Do | DiPLUS Do |
| O | O | I | I | Di ⊕ Do | DoMINUS DIMINUS I |
| I | O | O | O | O | Do PLUS I |
| I | O | I | O | I | Do |
| I | O | O | I | Di | DiPLUS DoPLUS I |
| I | O | I | I | $\overline{Di}$ | Do MINUS DI |
| O | I | O | O | $\overline{Di} - Do$ | Do |
| O | I | I | O | $Di + \overline{Do}$ | Do MINUS I |
| O | I | O | I | Di + Do | DiPLUS Do |
| O | I | I | I | $\overline{Di} \cdot \overline{Do}$ | DoMINUS DIMINUS I |
| I | I | O | O | Di · Do | Do PLUS I |
| I | I | I | O | $\overline{Di} + \overline{Do}$ | Do |
| I | I | O | I | $Di \cdot \overline{Do}$ | DIPLUS DoPLUS I |
| I | I | I | I | $\overline{Di} + Do$ | Do minus Di |

FIG. 23c

# FIG.24